# EUROPÄISCHE PATENTSCHRIFT

(11) **EP 2 611 644 B1**
(45) Veröffentlichungstag und Bekanntmachung des Hinweises auf die Patenterteilung: **10.10.2018**
(21) Anmeldenummer: 11748395.8
(22) Anmeldetag: 24.08.2011
(51) Int. Cl.: H02J 7/00, H02J 7/02, H02J 5/00, B60L 11/12, B60L 11/18

(54) **SYSTEM ZUM LADEN EINER WIEDERAUFLADBAREN BATTERIE EINES ELEKTROFAHRZEUGS**
SYSTEM FOR CHARGING A RECHARGEABLE BATTERY OF AN ELECTRIC VEHICLE
SYSTÈME DE CHARGE D'UNE BATTERIE RECHARGEABLE D'UN VÉHICULE ÉLECTRIQUE

(30) Priorität: 03.09.2010 DE 102010040239
(43) Veröffentlichungstag der Anmeldung: 10.07.2013
(73) Patentinhaber: Bayerische Motoren Werke Aktiengesellschaft, 80809 München (DE)
(72) Erfinder: JUNG, Merten, 80639 Muenchen (DE); MUELLER, Patrick, 85283 Wolnzach-Gosseltshausen (DE); GRIESSBACH, Robert, 83629 Weyarn (DE); SCHIMANEK, Thomas, 82229 Seefeld (DE); HIEBER, Christian, 82110 Germering (DE)
(86) Internationale Anmeldenummer: PCT/EP2011/064547
(87) Internationale Veröffentlichungsnummer: WO 2012/028508

(56) Entgegenhaltungen:
- EP-A1- 2 039 560
- EP-A1- 2 113 410
- FR-A1- 2 942 087

## Beschreibung

Die Erfindung betrifft ein System zum Laden einer wiederaufladbaren Batterie eines Elektrofahrzeugs, bei dem das Elektrofahrzeug mit einer elektrischen Antriebsmaschine, einem einen ersten Ausgangswechselstrom erzeugenden Generator, einem den Generator treibenden während des Fahrbetriebs des Elektrofahrzeugs startbaren Verbrennungsmotor und einer ersten elektrischen Ladesteckvorrichtung versehen ist.

Im individuellen Personennahverkehr gewinnen besonders klima- und umweltfreundliche Fahrzeugkonzepte mit alternativen Antriebsvarianten, insbesondere Elektroantrieben, zunehmend Marktanteile. Diese Elektroantriebe beziehen die elektrische Leistung für die Traktion typischerweise aus Batterien mit einer Spannungslage im Hochvoltbereich, vorzugsweise aus wiederaufladbaren Batterien in Lithium-Ionen-Technologie. Diese Sekundärbatterien bieten einige Vorteile hinsichtlich Energie-und Leistungsdichte gegenüber anderen elektrochemischen Energiespeichertechnologien. In Fahrzeugen mit Elektroantrieb werden diese Akkumulatoren üblicherweise im Standbetrieb oder im abgestellten Zustand des Elektrofahrzeugs, das heißt im nicht fahrbereiten Betriebszustand, über das Wechselstromnetz, in der Regel das Hausnetz des Fahrzeugnutzers, oder über Gleichstrom-Ladestationen geladen. Bei Elektrofahrzeugen mit einem während des Fahrbetriebs zuschaltbaren Verbrennungsmotor ist das Laden auch während der Fahrt bzw. im fahrbereiten Betriebszustand, möglich. Der Verbrennungsmotor treibt einen Generator zur Erzeugung von Strom, der auch als Batterieladestrom genutzt werden kann. Vorzugsweise dient die vom Verbrennungsmotor abgegebene Leistung zur reichweitenverlängernden Versorgung einer elektrischen Antriebsmaschine des Elektrofahrzeugs, weswegen die Kombination aus Verbrennungsmotor und Generator im vorliegenden Dokument als Range-Extender bezeichnet wird. Demzufolge sind an die Bordnetzarchitektur eines Elektrofahrzeugs besondere technische Anforderungen gestellt, die vor allem die Energie- und Leistungsflüsse im Standbetrieb und im Fahrbetrieb des Elektrofahrzeugs betreffen. Einen Teil dieser Bordnetzarchitekturstellt das System zum Laden der wiederaufladbaren Batterie dar.

Ladesysteme zum Wiederaufladen der Batterie eines Elektrofahrzeugs sind aus dem Stand der Technik bekannt. Beispielweise wird im Dokument EP 0 596 988 M1 das elektrische Versorgungssystem eines batteriegespeisten elektrischen Fahrzeugs beschrieben. Hierbei wird die Versorgung aus öffentlichen Wechselstromnetzen zugrunde gelegt. Weiterhin wird im Dokument EP 0 610 258 B1 eine Ladestation für Elektrofahrzeuge dargelegt, wobei insbesondere die Bedingung vorangestellt wird, dass die Ladestation eine Gleichspannung bereitstellt. Das Dokument EP2113410 ist als nächstliegender Stand der Technik angesehen und offenbart die Präambel des unabhängigen Anspruchs 1. Es ist eine Aufgabe der vorliegenden Erfindung, ein verbessertes Ladesystem zum Wiederaufladen einer Batterie in einem Elektrofahrzeug anzugeben.

Gelöst wird diese Aufgabe durch ein System zum Laden einer wiederaufladbaren Batterie eines Elektrofahrzeugs gemäß Anspruch 1. Vorteilhafte Ausführungsformen und Weiterbildungen der Erfindung ergeben sich aus den abhängigen Ansprüchen.

Erfindungsgemäß ist bei gestartetem Verbrennungsmotor der Generator zumindest temporär als elektrische Leistungsquelle zur Versorgung der Batterie mit Ladeleistung verwendbar und die erste elektrische Ladesteckvorrichtung geometrisch derart ausgeführt, dass ein einen zweiten Ausgangswechselstrom lieferndes, einphasiges Wechselstromnetz mit einem ersten Ladekabel an die erste elektrische Ladesteckvorrichtung anschließbar ist, um als elektrische Leistungsquelle im abgestellten Zustand des Elektrofahrzeugs die Batterie mit Ladeleistung zu versorgen. Dabei ist die erste Ladesteckvorrichtung für eine Belastung mit einer maximalen elektrischen Spannungslage von mindestens 240 Volt und einer maximalen Stromstärke von zumindest 32 Ampere ausgelegt und eine zweite elektrische Ladesteckvorrichtung im Elektrofahrzeug integriert, an welche mit einem zweiten Ladekabel eine einen ersten Gleichstrom liefernde Gleichstrom-Ladestation im abgestellten Zustand des Elektrofahrzeugs anschließbar ist, so dass im abgestellten Zustand des Elektrofahrzeugs die Gleichstrom-Ladestation entweder ausschließlich oder gleichzeitig mit dem einphasigen Wechselstromnetz als elektrische Leistungsquelle zur Versorgung der Batterie mit Ladeleistung verwendbar ist.

Ein Vorteil der Erfindung liegt darin begründet, dass eine hohe Flexibilität des Fahrzeugnutzers hinsichtlich der Lademöglichkeiten der wiederaufladbaren Batterie im abgestellten Zustand des Elektrofahrzeugs gegeben ist. Neben der Ladung der Batterie an einer beispielsweise öffentlichen Ladestation über die Gleichstrom-Ladesteckvorrichtung, das heißt die zweite Ladesteckvorrichtung, ist das Laden an Wechselspannungsquellen mehrspannungsfähig über die Wechselstrom-Steckvorrichtung, das heißt die erste Ladesteckvorrichtung, durchführbar.

Gemäß einer bevorzugten Ausführungsform der vorliegenden Erfindung wird der erste Ausgangswechselstrom von einem ersten Wechselstrom-Gleichstrom-Wandler und einem dem ersten Wechselstrom-Gleichstrom-Wandler parallel geschalteten zweiten Wechselstrom-Gleichstrom-Wandler zu einem zweiten Gleichstrom gleichgerichtet. Aus der Parallelschaltung der beiden Wandler resultiert insbesondere eine hohe länderspezifische Flexibilität bei der Auslegung der Ladefunktion an Wechselspannungsquellen.

Nach einer weiteren bevorzugten Ausführungsform der Erfindung versorgt der zweite Gleichstrom entweder die elektrische Antriebsmaschine durch einen der elektrischen Antriebsmaschine vorgeschalteten Gleichstrom-Wechselstrom-Wandler mit elektrischer Leistung oder der zweite Gleichstrom versorgt die elektrische Antriebsmaschine durch den der elektrischen Antriebsmaschine vorgeschalteten Gleichstrom-Wechselstrom-Wandler mit elektrischer Leistung und lädt gleichzeitig die Batterie.

Im Rahmen dieser Ausführungsform ermöglicht das Ladesystem die Ladung der Batterie im fahrbereiten Zustand oder im Fahrbetrieb mit dem Range-Extender. Dies bedeutet, dass Wechselstrom vom Generator erzeugt wird, der im Bedarfsfalle, das heißt vorzugsweise um die Reichweite einer begonnenen Fahrt zu verlängern oder überhaupt eine bevorstehende Fahrt zu ermöglichen, vom Verbrennungsmotor unter Verbrauch von Kraftstoff getrieben wird. Die vom Generator als Strom abgegebene Leistung wird hierbei vom Bordnetz, wobei das erfindungsgemäße Ladesystem einen Teil dieses Bordnetzes darstellt, vorzugsweise in Richtung der elektrischen Antriebsmaschine abgezweigt. Alternativ wird die abgegebene Leistung teilweise zum gleichzeitigen Laden der Batterie genutzt.

Es kann auch vorteilhaft sein, dass der zweite Ausgangswechselstrom vom ersten Wechselstrom-Gleichstrom-Wandler und vom dem ersten Wechselstrom-Gleichstrom-Wandler parallel geschalteten zweiten Wechselstrom-Gleichstrom-Wandler zu einem dritten Gleichstrom gleichgerichtet wird und der dritte Gleichstrom die Batterie lädt.

Gemäß der vorliegenden Beschreibung unterscheidet sich der dritte Gleichstrom vom zweiten Gleichstrom insbesondere dadurch, dass Fluss des zweiten Gleichstroms den Betrieb des Range-Extenders voraussetzt und Fluss des dritten Gleichstroms das Laden des Fahrzeugs an einer Wechselstromquelle über die erste Ladesteckvorrichtung voraussetzt.

Nach einer weiteren Ausführungsform der vorliegenden Erfindung sind der erste Wechselstrom-Gleichstrom-Wandler für eine maximale Eingangsleistung von mindestens
230 Volt x 16 Ampere und der zweite Wechselstrom-Gleichstrom-Wandler für eine maximale Eingangsleistung von mindestens 230 Volt x 16 Ampere ausgelegt.

Ein derartiges System ermöglicht es dem Nutzer des Elektrofahrzeugs, beispielsweise in Nordamerika, das Elektrofahrzeug zum Laden der Batterie an unterschiedlich spezifizierte, aber verbreitete Wechselspannungsnetze zum Laden anzuschließen. So sind etwa in Nordamerika mindestens zwei Wechselspannungsnetze im häuslichen Bereich weit verbreitet, ein bei kontinuierlich 16 Ampere gesichertes 120 Volt Netz und ein bei kontinuierlich 32 Ampere gesichertes 240 Volt Netz. Falls das Fahrzeug zum Laden an das Netz mit höherer Spannung gebracht wird, erfolgt das Laden der Batterie in kürzerer Zeit verglichen mit dem Netz niedrigerer Spannung, was im weiteren Verlauf des vorliegenden Dokuments als Schnellladen bezeichnet wird.

Zusätzlich verfügt das Ladesystem vorzugsweise über die Eigenschaft, dass der erste Gleichstrom durch einen Hochleistungs-Schalter, insbesondere ein Gleichstrom-Schütz, unterbrechbar ist.

Dadurch kann die Batterie während des Ladevorgangs an einer Gleichstrom-Ladestation beispielsweise zu Zwecken der Hochvoltsicherheit galvanisch von der Gleichstrom-Ladestation getrennt werden.

Weiterhin kann das erfindungsgemäße Ladesystem derart ausgeführt sein, dass der zweite Wechselstrom-Gleichstrom-Wandler und das Gleichstrom-Schütz geometrisch in einer Kombinations-Ladeeinheit integriert sind und die Parallelschaltung des ersten Wechselstrom-Gleichstrom-Wandlers mit dem zweiten Wechselstrom-Gleichstrom-Wandler außerhalb der Kombinations-Ladeeinheit oder an der Kombinations-Ladeeinheit ausgeführt ist.

Mit dieser Ausführungsform gehen besondere Vorteile einher, die sich vor allem für den Fahrzeughersteller im Sinne einer modularen Bauweise des Bordnetzes bzw. des Elektrofahrzeugs ergeben. Beispielsweise kann es in der beschriebenen Ausführungsform möglich sein, das Gleichstromladen an einer Gleichstrom-Ladestation in Form einer Sonderausstattung anzubieten, da diese Funktion und die hierfür technisch notwendigen Komponenten nicht zwingend für die Funktionalität des restlichen Ladesystems vorhanden sein müssen. Somit könnten Elektrofahrzeuge in unterschiedlichen Konfigurationen angeboten werden, das bedeutet lediglich optional mit der Möglichkeit des Gleichstrom-Ladens. Falls das Fahrzeug mit der Möglichkeit des Gleichstrom-Ladens ausgeführt ist, könnte in einem weiteren Konfigurationsbeispiel des Ladesystems auf den zweiten Wechselstrom-Gleichstrom-Wandler verzichtet und somit ab Werk eine vereinfachte Version der Kombinations-Ladeeinheit, die ohne den zweiten Wechselstrom-Gleichstrom-Wandlers ausgeführt ist, verbaut werden. Auf diese Weise kann am Wechselstromnetz gemäß der Auslegung des ersten Wechselstrom-Gleichstrom-Wandlers nur mit einer maximalen Leistung von zumindest 230 Volt x 16 Ampere, aiso ohne Möglichkeit des Schnellladens, geladen werden. Wird das Fahrzeug etwa vorwiegend in Europa oder in anderen Ländern oder Regionen der Erde genutzt oder von diesen Ländern aus beim Fahrzeughersteller bestellt, ist die Konfiguration mit nur einem Wechselstrom-Gleichstrom-Wandler mangels flächendeckender Verbreitung von Wechselspannungsnetzen mit höherer Ausgangsleistung ohnehin technisch ausreichend. Die Möglichkeit des Schnelladens ist in diesen Fällen ohne technischen Wert für den Kunden, was bedeutet, dass dem Kunden ein kostengünstigeres Fahrzeug ohne spürbare technische Einschränkung angeboten werden kann. Die modulare Ausgestaltung des erfindungsgemäßen Ladesystems, weiterhin als Modularität bezeichnet, kann es dem Fahrzeughersteller auf die beschriebene Weise ermöglichen, verschiedene Varianten des Elektrofahrzeugs kostengünstig nach einem Baukastenprinzip anzubieten und spezifische Kundenbedürfnisse, z.B. in Form von Sonderausstattungen oder Ländervarianten, unter geringem produktionstechnischem Aufwand zu berücksichtigen. In diesem Kontext ist es aufgrund der speziellen Ausführungsform des Ladesystems darüber hinaus denkbar, den Range-Extender ebenfalls als optional zu betrachten und als Sonderausstattung anzubieten.

Vorzugsweise werden die Kombinations-Ladeeinheit, der erste Wechselstrom-Gleichstrom-Wandler, die erste elektrische Ladesteckvorrichtung und die zweite elektrische Ladesteckvorrichtung von mindestens einem Steuergerät funktional gesteuert und überwacht.

In einem derartigen Steuergerät bzw. in derartigen Steuergeräten können alle notwendigen Umfänge an Software in einem zumindest solchen Maße integriert werden, dass die Modularität des Ladesystems nicht beeinträchtigt wird. Typischerweise umfassen die Softwareumfänge Steuerfunktionen, Regelfunktionen, Überwachungsfunktionen und Kommunikationsfunktionen via Datenbussen.

Eine besondere Ausführungsform ist dadurch dargestellt, dass der erste Wechselstrom-Gleichstrom-Wandler, die Kombinations-Ladeeinheit, der Wechselstrom-Gleichstrom-Wandler und das Steuergerät Komponenten des Elektrofahrzeugs sind.

Mit dieser besonderen Ausführungsform ist unter anderem der Vorteil verbunden, dass die Ladeinfrastruktur außerhalb des Fahrzeugs, zum Beispiel die Gleichstrom-Ladestation oder das öffentliche Wechselstromnetz technisch möglichst einfach gehalten werden können beziehungsweise die Herstellung einer leitenden Verbindung über Ladekabel in erster Linie lediglich geometrisch ermöglicht sein muss.

Die Erfindung beruht auf den nachfolgend dargelegten Überlegungen: Bei einem Elektrofahrzeug mit wiederaufladbarer Batterie sind gemäß geforderter Ladeleistung länderspezifisch unterschiedliche Varianten von Ladegeräten vorzusehen beispielsweise für DC-Laden, einphasiges AC-Laden oder dreiphasiges AC-Laden. Zusätzlich stellt sich die Ladeinfrastruktur nach dem aktuellen Stand der Serienentwicklung derart volatil dar, dass noch nicht absehbar ist, weiche Ladearchitekturen tatsächlich zukunftsfähig sind. Typischerweise entspricht ein einphasiges 3,5 Kilowatt AC-Ladegerät dem Stand der Serienentwicklung mit gegebenenfalls der zusätzlichen Möglichkeit des DC-Ladens. Ein Nachteil dieser Technik ist es, dass DC-Ladestationen insbesondere in den USA nicht weit verbreitet sind und somit nur mit dem 3,5 Kilowatt AC-Ladegerät geladen werden könnte. Andernfalls müssten zusätzliche Ladevarianten entwickelt werden, die wiederum für andere Märkte nicht notwendig erscheinen. Deshalb steht dem Fahrer als Basisausstattung ein 3,5 Kilowatt AC-Ladegerät zur Verfügung, welches hier als Basisladegerät bezeichnet wird. Als Sonderausstattung kann ein hier als Komfortladegerät bezeichnetes AC-Ladegerät geordert werden, in welchem ein zusätzliches 3,5 Kilowatt AC-Ladegerät eingebaut ist, das parallel zum Basisladegerät geschaltet werden kann. Somit kann eine AC-Ladeleistung von 7 Kilowatt erreicht werden. Gegebenenfalls kann das Komfortladegerät baugleich zum Basisladegerät gestaltet sein. Das Komfortladegerät enthält ferner eine hier als Schützbox bezeichnete Vorrichtung zum Schalten von hohen Strömen, die auch DC-Laden mit hohen Leistungen ermöglicht. Dazu muss eine separate DC-Ladebuchse im Fahrzeug über die Schützbox vom Hochvoltsystem getrennt werden können. Damit geht der Vorteil einher, dass durch die Verbindung von Schützbox und Komfortladegerät die Entwicklung weiterer Ladearchitekturvarianten vermieden werden, da mit der beschriebenen Architektur länderübergreifend flexible Ladefunktionen zur Verfügung gestellt werden. Dies umfasst beispielsweise das AC-Laden am bei 32 Ampere gesicherten Wechselspannungsnetz in den USA mit der zusätzlichen Möglichkeit des DC-Ladens an einer DC-Ladestation.

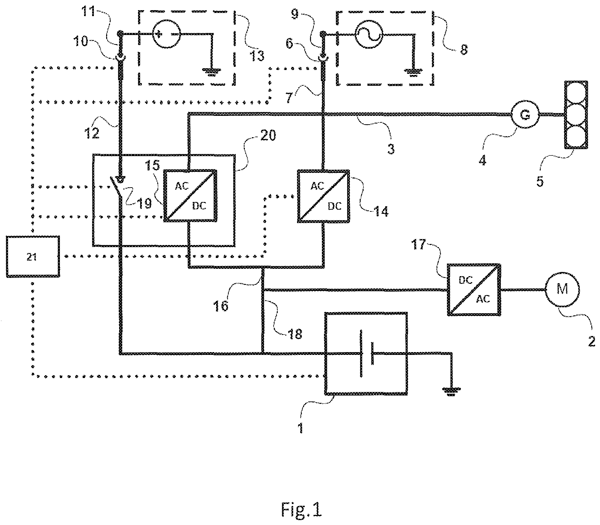

Im Folgenden wird anhand der beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Im Einzelnen zeigt schematisch
- Fig. 1:: Ein Blockschaltbild eines Systems zum Laden einer wiederaufladbaren Batterie eines Elektrofahrzeugs.

Der Fig. 1 zeigt die Bordnetzarchitektur eines Elektrofahrzeugs mit Range-Extender. Der Range-Extender besteht aus einem Verbrennungsmotor (5), der mit kleiner Zylinderzahl ausgeführt sein kann und bei einem Verbrauchs- und leistungsoptimalem Betriebspunkt betrieben werden kann, und einem Generator (4), der vom Verbrennungsmotor (5) mechanisch getrieben wird. Der Generator erzeugt Wechselstrom (3). Die Stromerzeugung durch den Range-Extender geschieht vorzugsweise im fahrbereiten Zustand, um die Reichweite während einer begonnenen Fahrt zu verlängern oder überhaupt eine Fahrt zu ermöglichen. Im Falle des im Betrieb befindenden Range-Extenders wird die vom Generator erzeugte Leistung zu den Eingängen von zwei parallel geschalteten Wechselstrom-Gleichstrom-Wandlern geführt (14,15). An den Ausgängen wird der resultierende Gleichstrom (16) typischerweise genutzt, die elektrische Maschine (2), welche die elektrische Leistung in mechanische Leistung wandelt, zu speisen. Zu diesem Zweck ist ein Wechselstrom-Gleichstrom-Wandler (17) als Wechselrichter der elektrischen Maschine vorgeschaltet, da diese eingangsseitig nicht mit Gleichstrom gespeist werden kann. Abhängig von der möglichen Leistungsabgabe des Range-Extenders (4,5) und der Leistungsanforderung der Antriebsmaschine (17) kann der Gleichstrom (16) alternativ zum Laden der Hochvoltbatterie (1) bereitgestellt werden, die bevorzugt in Lithium-Ionen-Technologie als elektrochemisches Energiespeichersystem ausgeführt ist. Als anderweitige elektrochemische Energiespeichersysteme wären beispielsweise auch Nickel-Metallhydrid-Batterien oder Blei-Säure-Batterien denkbar. Im abgestellten Zustand des Fahrzeugs, das heißt, wenn das Elektrofahrzeug nicht fahrbereit ist, kann gemäß der in Fig. 1 abgebildeten Topologie die Batterie (1) über externe elektrische Leistungsquellen geladen werden, hier zum Beispiel den Hausanschluss des öffentlichen Wechselstromnetzes (8) oder eine Gleichstrom-Ladestation (13). Auch das simultane Laden an einer Wechselstromquelle (8) und einer Gleichstrom-Ladestation (13) ist möglich. Das Laden an einer Wechselstromquelle erfolgt durch das Anstecken eines geeigneten Ladekabels (9) an die im Fahrzeug integrierte erste elektrische Ladesteckvorrichtung (6). Der bereitgestellte Wechselstrom (7) wird von den beiden Wechselstrom-Gleichstrom-Wandlern (14,15) gleichgerichtet und der resultierende Gleichstrom (18) lädt die Batterie (1). Die beiden Wechselstrom-Gleichstrom-Wandler sind für eine maximale Eingangsleistung von zumindest 230 Volt x 16 Ampere ausgelegt. Die Gleichstrom-Ladestation (13) wird über ein geeignetes Ladekabel (11) mit der im Fahrzeug integrierten Ladesteckvorrichtung (10) verbunden. Der bereitgestellte Gleichstrom (12) lädt die Batterie (1) und ist über ein Gleichstrom-Schütz (19), etwa aus Sicherheitsgründen oder bei Erreichen der Vollladung, unterbrechbar. Das Gleichstrom-Schütz (19) und der Wechselstrom-Gleichstrom-Wandler (15) sind vorzugsweise in einem Gehäuse untergebracht, das als Kombinations-Ladeeinheit (20) bezeichnet wird. Geometrisch ist die Kombinations-Ladeeinheit (20) derart ausgeführt, dass der Wechselstrom-Gleichstrom-Wandler (15) mechanisch lösbar, zum Beispiel mit Klemmen, Schrauben oder einem Einschubmechanismus, in die Kombinations-Ladeeinheit (20) integriert ist. Dadurch wird der modulare Aufbau des Ladesystems besonders deutlich. So kann das Elektrofahrzeug beispielsweise mit oder ohne die Funktion Gleichstrom-Laden, das bedeutet mit oder ohne Kombinations-Ladeeinheit (20) ausgeliefert werden. Falls das Fahrzeug mit der Funktion Gleichstrom-Laden ausgestattet ist, kann das Fahrzeug weiterhin mit oder ohne die Funktion Schnelladen, das bedeutet mit oder ohne Wechselstrom-Gleichstrom-Wandler (15) ausgeliefert werden. In manchen Ländern erreicht der Wechselstrom-Gleichstrom-Wandler (14) wegen der Leistungswerte des öffentlichen Wechselstromnetzes (8) ohnehin nicht die auslegungsgemäße Leistungsgrenze von zumindest 230 Volt x 16 Ampere, was zum Beispiel beim in den USA verbreiteten 120 Volt Wechselstromnetz der Fall wäre. Für all jene Kunden kann zu deren Kostenvorteil auf den Wechselstrom-Gleichstrom-Wandler (15) verzichtet werden, was eine länderspezifische Ausstattungsoption des Fahrzeugs mit oder ohne den Wechselstrom-Gleichstrom-Wandler (15) ermöglicht. In diesem Zusammenhang stellt die Auslegung des Wechselstrom-Gleichstrom-Wandlers (14) über 230 Volt x 16 Ampere für viele Länder keinen Funktionsvorteil, jedoch einen Kostennachteil dar. Auch der Range-Extender, das bedeutet die Kombination aus Generator (4) und Verbrennungsmotor (5) kann unabhängig von den oben dargestellten Varianten ebenfalls optional angeboten werden. Falls der Generator (4) und der Verbrennungsmotor (5) nicht im Fahrzeug verbaut sind, entfällt der Wechselstrom (3). Das Ladesystem wird unabhängig von den gewählten Varianten von einem Steuergerät (21) geregelt, gesteuert und überwacht. Die hierfür notwendigen Kommunikationspfade, die über Datenbusse implementiert sind, sind in Fig. 1 als gepunktete Linien dargestellt.

### Bezugszeichenliste

- 1: wiederaufladbare Batterie
- 2: elektrische Antriebsmaschine
- 3: erster Ausgangswechselstrom
- 4: Generator
- 5: Verbrennungsmotor
- 6: erste elektrische Ladesteckvorrichtung
- 7: zweiter Ausgangswechselstrom
- 8: Wechselstromnetz
- 9: erstes Ladekabel
- 10: zweite elektrische Ladesteckvorrichtung
- 11: zweites Ladekabel
- 12: erster Gleichstrom
- 13: Gleichstrom-Ladestation
- 14: erster Wechselstrom-Gleichstrom-Wandler
- 15: zweiter Wechselstrom-Gleichstrom-Wandler
- 16: zweiter Gleichstrom
- 17: Gleichstrom-Wechselstrom-Wandler
- 18: dritter Gleichstrom
- 19: Gleichstrom-Schütz
- 20: Kombinations-Ladeeinheit
- 21: Steuergerät

## Patentansprüche

1. System zum Laden einer wiederaufladbaren Batterie (1) eines Elektrofahrzeugs,
bei dem das Elektrofahrzeug mit einer elektrischen Antriebsmaschine (2), einem einen ersten Ausgangswechselstrom (3) erzeugenden Generator (4), einem den Generator (4) mechanisch treibenden während des Fahrbetriebs des Elektrofahrzeugs startbaren Verbrennungsmotor (5) und einer ersten elektrischen Ladesteckvorrichtung (6) versehen ist, wobei
- bei gestartetem Verbrennungsmotor (5) im fahrenden Zustand des Elektrofahrzeugs der Generator (4) als elektrische Leistungsquelle zur Versorgung der Batterie (1) mit Ladeleistung verwendbar ist,
- die erste elektrische Ladesteckvorrichtung (6) geometrisch derart ausgeführt ist, dass ein einen zweiten Ausgangswechselstrom (7) lieferndes, einphasiges Wechselstromnetz (8) mit einem ersten Ladekabel (9) an die erste elektrische Ladesteckvorrichtung (6) anschließbar ist, um als elektrische Leistungsquelle im abgestellten Zustand des Elektrofahrzeugs die Batterie (1) mit Ladeleistung zu versorgen,
- eine zweite elektrische Ladesteckvorrichtung (10) im Elektrofahrzeug integriert ist,
- an welche mit einem zweiten Ladekabel (11) eine einen ersten Gleichstrom (12) liefernde Gleichstrom-Ladestation (13) im abgestellten Zustand des Elektrofahrzeugs anschließbar ist, so dass im abgestellten Zustand des Elektrofahrzeugs die Gleichstrom-Ladestation (13) auch gleichzeitig mit dem einphasigen Wechselstromnetz als elektrische Leistungsquelle zur Versorgung der Batterie (1) mit Ladeleistung verwendbar ist,
- und wobei der erste Gleichstrom (12) durch ein Gleichstrom-Schütz (19) aus Sicherheitsgründen oder bei Erreichen der Vollladung der Batterie (1) unterbrechbar ist, **dadurch gekennzeichnet,**
- **dass** die erste elektrische Ladesteckvorrichtung (6) für eine Belastung mit einer maximalen elektrischen Spannungslage von zumindest 240 Volt und einer maximalen Stromstärke von zumindest 32 Ampere ausgelegt ist,
- **dass** der erste Ausgangswechselstrom (3) von einem ersten Wechselstrom-Gleichstrom-Wandler (14) und einem dem ersten Wechselstrom-Gleichstrom-Wandler (14) parallel geschalteten zweiten Wechselstrom-Gleichstrom-Wandler (15) zu einem zweiten Gleichstrom (16) gleichgerichtet wird,
- **dass** der erste Wechselstrom-Gleichstrom-Wandler (14) für eine maximale Eingangsleistung von zumindest 230 Volt x 16 Ampere ausgelegt ist und der zweite Wechselstrom-Gleichstrom-Wandler (15) für eine maximale Eingangsleistung von zumindest 230 Volt x 16 Ampere ausgelegt ist, und
- **dass** der zweite Wechselstrom-Gleichstrom-Wandler (15) und das Gleichstrom-Schütz (19) geometrisch in einem Gehäuse einer Kombinations-Ladeeinheit (20) integriert sind und die Parallelschaltung des ersten Wechselstrom-Gleichstrom-Wandlers (14) mit dem zweiten Wechselstrom-Gleichstrom-Wandler (15) außerhalb der Kombinations-Ladeeinheit (20) oder an der Kombinations-Ladeeinheit (20) ausgeführt ist, wobei der zweite Wechselstrom-Gleichstrom-Wandler (15) mit Klemmen, Schrauben oder einem Einschubmechanismus mechanisch lösbar in die Kombinations-Ladeeinheit (20) integriert ist.

2. System nach Anspruch 1,
**dadurch gekennzeichnet, dass**
der zweite Gleichstrom (16) entweder die elektrische Antriebsmaschine (2) durch einen der elektrischen Antriebsmaschine (2) vorgeschalteten Gleichstrom-Wechselstrom-Wandler (17) mit elektrischer Leistung versorgt oder der zweite Gleichstrom (16) die elektrische Antriebsmaschine (2) durch den der elektrischen Antriebsmaschine (2) vorgeschalteten Gleichstrom-Wechselstrom-Wandler (17) mit elektrischer Leistung versorgt und gleichzeitig die Batterie (1) lädt.

3. System nach Anspruch 2,
**dadurch gekennzeichnet, dass**
der zweite Ausgangswechselstrom (7) vom ersten Wechselstrom-Gleichstrom-Wandler (14) und vom zweiten Wechselstrom-Gleichstrom-Wandler (15) zu einem dritten Gleichstrom (18) gleichgerichtet wird und der dritte Gleichstrom (18) die Batterie (1) lädt.

4. System nach einem der vorhergehenden Ansprüche,
**dadurch gekennzeichnet, dass**
die Kombinations-Ladeeinheit (20), der erste Wechselstrom-Gleichstrom-Wandler (14), die erste elektrische Ladesteckvorrichtung (6) und die zweite elektrische Ladesteckvorrichtung (10) von mindestens einem Steuergerät (21) funktional gesteuert und überwacht werden.

5. System nach einem der vorhergehenden Ansprüche,
**dadurch gekennzeichnet, dass**
der erste Wechselstrom-Gleichstrom-Wandler (14), die Kombinations-Ladeeinheit (20), der zweite Wechselstrom-Gleichstrom-Wandler (15) und das Steuergerät (21) Komponenten des Elektrofahrzeugs sind.

## Claims

1. A system for charging a rechargeable battery (1) of an electric vehicle, in which the electric vehicle is provided with an electric drive motor (2), a generator (4) generating a first output alternating current (3), an internal combustion engine (5), which mechanically drives the generator (4) and can be started during a driving mode of the electric vehicle, and a first electric plug-in charging device (6), wherein
- the generator (4) can be used as an electric power source for supplying the battery (1) with charging power after the internal combustion engine (5) has been started, in the driving state of the electric vehicle,
- the first electric plug-in charging device (6) is formed geometrically in such a way that a single-phase AC power mains (8) delivering a second output alternating current (7) can be connected, by means of a first charging cable (9), to the first electric plug-in charging device (6) so as to supply the battery (1) with charging power as an electric power source in the switched-off state of the electric vehicle,
- a second electric plug-in charging device (10) is integrated in the electric vehicle,
- to which, by means of a second charging cable (11), a DC charging station (13) delivering a first direct current (12) can be connected in the switched-off state of the electric vehicle, so that, in the switched-off state of the electric vehicle, the DC charging station (13) can also be used simultaneously with the single-phase AC power mains as an electric power source for supplying the battery (1) with charging power,
- and wherein the first direct current (12) can be interrupted by a DC contactor (19) for safety reasons or when the full charge level of the battery (1) has been reached,
**characterised in that**
- the first electric plug-in charging device (6) is designed for a maximum electric voltage load of at least 240 volts and a maximum current strength of at least 32 amperes,
- **in that** the first output alternating current (3) is rectified by a first AC/DC converter (14) and a second AC/DC converter (15) connected in parallel with the first AC/DC converter (14) into a second direct current (16),
- **in that** the first AC/DC converter (14) is designed for a maximum input power of at least 230 volts x 16 amperes, and the second AC/DC converter (15) is designed for a maximum input power of at least 230 volts x 16 amperes, and
- **in that** the second AC/DC converter (15) and the DC contactor (19) are geometrically integrated in a housing of a combination charging unit (20) and the parallel connection of the first AC/DC converter (14) to the second AC/DC converter (15) is established outside the combination charging unit (20) or at the combination charging unit (20), wherein the second AC/DC converter (15) is integrated in the combination charging unit (20) by means of clips, screws or an insertion mechanism, in such a way that said second AC/DC converter can be mechanically disconnected.

2. A system according to claim 1,
**characterised in that**
either the second direct current (16) supplies electrical power to the electric drive motor (2) by a DC/AC converter (17) arranged upstream of the electric drive motor (2), or the second direct current (16) supplies electrical power to the electric drive motor (2) by the DC/AC converter (17) arranged upstream of the electric drive motor (2) and at the same time charges the battery (1).

3. A system according to claim 2,
**characterised in that**
the second output alternating current (7) is rectified by the first AC/DC converter (14) and by the second AC/DC converter (15) into a third direct current (18) and the third direct current (18) charges the battery (1).

4. A system according to any one of the preceding claims,
**characterised in that**
the combination charging unit (20), the first AC/DC converter (14), the first electric plug-in charging device (6), and the second electric plug-in charging device (10) are functionally controlled and monitored by at least one control device (21).

5. A system according to any one of the preceding claims,
**characterised in that**
the first AC/DC converter (14), the combination charging unit (20), the second AC/DC converter (15), and the control device (21) are components of the electric vehicle.

## Revendications

1. Système de charge d'une batterie rechargeable (1) d'un véhicule électrique dans lequel le véhicule électrique est équipé d'une machine d'entraînement électrique (2), d'un générateur (4) produisant un premier courant alternatif de sortie (3), d'un moteur à combustion interne (5) propulsant mécaniquement le générateur (4) pouvant être démarré pendant le déplacement du véhicule électrique, ainsi qu'un premier dispositif connecteur de charge électrique (6),
système dans lequel,
- lorsque le moteur à combustion interne (5) est démarré, dans l'état de déplacement du véhicule électrique, le générateur (4) peut être utilisé comme source d'énergie électrique pour l'alimentation de la batterie (1) en énergie de charge,
- le premier dispositif connecteur de charge électrique (6) a une configuration géométrique telle qu'un réseau de courant alternatif monophasé (8) fournissant un second courant alternatif de sortie (7) puisse être branché avec un premier câble de charge (9) sur le premier dispositif connecteur de charge électrique (6) pour alimenter la batterie (1) en énergie de charge en tant que source d'énergie électrique, lorsque le véhicule électrique est à l'arrêt,
- un second dispositif connecteur de charge électrique (10) est intégré dans le véhicule électrique,
- sur lequel peut être branche avec un second câble de charge (11) un poste de charge en courant continu (13) fournissant un premier courant continu (12) lorsque le véhicule électrique est à l'arrêt, de sorte que, lorsque le véhicule électrique est à l'arrêt le poste de charge en courant continu (13) puisse également être utilisé en tant que source d'énergie électrique pour alimenter la batterie (1) en énergie de charge, simultanément au réseau de courant alternatif monophasé, et
- le premier courant continu (12) peut être coupé par un disjoncteur de protection de courant continu (19) pour des raisons de sécurité ou lorsque la pleine charge de la batterie (1) a été atteinte,
**caractérisé en ce que**
- le premier dispositif connecteur de charge électrique (6) est conçu pour une charge avec un niveau de tension électrique maximum d'au moins 240 Volts et une intensité de courant maximum d'au moins 32 ampères,
- le premier courant alternatif de sortie (3) peut être redressé en un second courant continu (16) par un premier convertisseur courant alternatif - courant continu (14) et un second convertisseur courant continu - courant alternatif (15) branchés parallèlement au premier convertisseur courant alternatif, courant continu (14),
- le premier convertisseur courant alternatif-courant continu (15) est conçu pour une puissance d'entrée maximum d'au moins 230 volts x 16 ampères et le second convertisseur et le second convertisseur courant alternatif - courant continu (15) est conçu pour une puissance d'entrée maximum d'au moins 230 volts x 16 ampères, et
- le second convertisseur courant alternatif - courant continu (15) et le disjoncteur de protection de courant continu (19) sont intégrés géométriquement dans le boîtier d'une unité de charge combinée (20), et
- le branchement en parallèle du premier convertisseur courant alternatif - courant continu (14) avec le second convertisseur courant alternatif - courant continu (15) est réalisé à l'extérieur de l'unité de charge combinée (20) ou sur l'unité de charge combinée (20), le second convertisseur courant alternatif - courant continu (15) étant intégré mécaniquement de façon amovible dans l'unité de charge combinée (20) par serrage, vissage ou mécanisme d'insertion par poussée.

2. Système conforme à la revendication 1,
**caractérisé en ce que**
le second courant continu (16) alimente en énergie électrique la machine d'entraînement électrique (2) par l'intermédiaire d'un convertisseur courant continu - courant alternatif (17) branché en amont de la machine d'entraînement électrique (2), ou le second courant continu (16) alimente en énergie électrique, la machine d'entraînement électrique (2) par l'intermédiaire d'un convertisseur courant continu - courant alternatif (17) monté en amont de la machine d'entraînement électrique (2), et charge simultanément la batterie (1).

3. Système conforme à la revendication 2,
**caractérisé en ce que**
le second courant alternatif de sortie (7) est redressé en un troisième courant continu (18) par le premier convertisseur courant alternatif - courant continu (14) et le second convertisseur courant alternatif - courant continu (15), et le troisième courant continu (18) charge la batterie (1).

4. Système conforme à l'une des revendications précédentes,
**caractérisé en ce que**
l'unité de charge combinée (20), le premier convertisseur courant alternatif - courant continu (14), le premier dispositif connecteur de charge électrique (6) et le second dispositif connecteur de charge électrique (10) sont commandés et surveillés de manière fonctionnelle par au moins un appareil de commande (21).

5. Système conforme à l'une des revendications précédentes,
**caractérisé en ce que**
le premier convertisseur courant alternatif - courant continu (14), l'unité de charge combinée (20), le second convertisseur courant alternatif - courant continu (15) et l'appareil de commande (21) sont des composants du véhicule électrique.
